# EUROPEAN PATENT SPECIFICATION

(11) **EP 2 346 339 B1**
(45) Date of publication and mention of the grant of the patent: **03.08.2016**
(21) Application number: 09817301.6
(22) Date of filing: 01.10.2009
(51) Int. Cl.: A21C 5/00, A21C 9/08, A21C 11/00, A21D 13/00

(54) **PROCESS FOR MASS-PRODUCTION OF DECORATED PANCAKES, CREPES, ETC., AND COMPOSITE PRODUCT OBTAINABLE BY THIS PROCESS**
VERFAHREN ZUR MASSENHERSTELLUNG VON DEKORIERTEN PFANNKUCHEN, CREPES U.Ä. UND DANACH ERHÄLTLICHES VERBUNDPRODUKT
PROCÉDÉ POUR LA PRODUCTION EN SÉRIE DE PANCAKES, CRÊPES, ETC., ET PRODUIT COMPOSITE SUSCEPTIBLE D'ÊTRE OBTENU SELON CE PROCÉDÉ

(30) Priority: 01.10.2008 EP 08165635; 01.10.2008 US 101795 P
(43) Date of publication of application: 27.07.2011
(73) Proprietor: St Michel Holding, 41700 Contres (FR)
(72) Inventor: Brysse, Marc, 8200 Brugge (BE); Ohms, Peter, 8200 Brugge (BE)
(74) Representative: Sayettat, Julien Christian
(86) International application number: PCT/EP2009/062775
(87) International publication number: WO 2010/037824

(56) References cited:
- WO-A-03/020043
- US-A- 3 544 334
- US-A1- 2005 048 182

## Description

The invention concerns the preparation of pancakes, crepes, and similar products, and more in particular the mass production of food products in the form of sheets (pancakes, crepes, tortillas, 'brick' pastry, etc.) having selected shapes and/or incorporating decorative designs / images.

The mass production of pancakes, crepes, tortillas, brick pastry, and more generally food products in sheet form, is known in the patent literature. Reference can be made in this respect to, for instance, US 2008/0060531 (pancakes and the like), WO 2004/100672 (food products in the form of sheets such as sheets of brick pastry), EP 1 759 585 (sandwich pancakes), US 3,993,788 (tortillas and similar products).
Some of these state of the art mass production methods involve imprinting artwork onto the food that is being cooked (US 2008/0060531), or stamping of a design on the outer surface of the product (EP 1 759 585).
Printing or stamping of decorative figures on food products is however a drawback in itself and the techniques there for are generally not satisfactory for moist products like pancakes.
The mass production of shaped food products, using moulding shapes or shaped baking plates has on the other hand the drawback of being not optimally compatible with the rather liquid batters as used for Dutch, French or American type pancakes and crepes, and of impairing the versatility of the method linked to such preset moulds.

Home preparation of 'designer' pancakes (i.e. pancakes having selected shapes and/or incorporating decorative designs / images) is rather well disclosed on numerous internet blogs, but the very 'artisanal' techniques explained there are not suitable for mass production of 'designer' food products in sheet form.

On the other hand the prior art concerning the commercial production of food products with decorative patterns discloses associating distinct dough compositions / portions which are baked simultaneously or after each other.

Thus US 2005/048182 A1 (King) discloses a method comprising the steps of depositing a quantity of a first batter on a baking surface, according to a predetermined pattern; first cooking the first batter on the baking surface for a first period of time; placing a base food product over the first batter on the baking surface; and second cooking both the base food product and the first quantity of batter for a second period of time to bond the first batter to the base food product. Both the first batter and base food product may consist of pancake batter and may be selected different from one another with respect to colour, taste and/or texture.

WO 03/020043 A1 (NESTEC) discloses a ready-for-use dough product comprising a first dough portion and a second dough portion, wherein the dough portions are associated with each other for simultaneous baking, with the first dough portion providing a different texture, colour and/or flavour from the second dough portion after the dough product is baked.

These methods according to the prior art, for producing food products with a decorative pattern without using moulding areas on the baking surface to define the decorative patterns, present the drawback that the decorative patterns and the outer shape of the finished product do not define neat, well defined contours, as found to be highly desirable for a large part of the purchasing public.

It is the objective of the present invention to remedy the drawbacks of the state of the art and to provide a process for mass production of food products in the form of sheets having selected shapes and/or incorporating decorative designs / images, which overcome de drawbacks of the state of the art methods.

The invention accordingly provides a process for the industrial preparation of food products in the form of sheets, such as in particular pancakes and crepes, more particularly "Dutch" type pancakes, by pouring a liquid batter on a heated surface according to selected shapes and/or decorative designs, comprising pouring at least two distinct batter compositions on a heated surface, which process uses at least one batter composition which is applied to build well defined batter lines defining at least one outer outline of the sheet shaped food product, whereas said contour batter outline is first provided on the heated surface, and the surface within said contour batter outline is subsequently filled up with another batter composition forming the main surface of the sheet shaped food product.

The method according to the invention thus introduces a totally new concept in the industrial manufacture of sheet shaped food products, in that one starts by building, on a flat baking surface, a shape of batter components which will act as a kind of "form" or "mould" for the subsequently poured (classical pancake) batter. This new concept allows a fast, flexible and cheap industrial manufacture (i.e. on a flat baking surface) of sheet shaped food products, such as in particular "Dutch type" pancakes, having a selected outer shape and well defined design patterns.

The process / method according to the invention may there for apply the following techniques, used alone or in combinations :
- using at least two distinct batter compositions of distinct colours;
- using at least two distinct batter compositions of distinct viscosity;
- using at least two distinct batter compositions, one of which is adapted to resist a different duration at a temperature between 100° and 250° C than the other;
- using at least two distinct batter compositions, one of which is adapted to build bubbles to a different extent, at a temperature between 100° and 250° C, than the other
- using at least two distinct batter compositions, one of which is applied to build well defined batter lines (strips, ribbons) which define an outer outline and/or design lines of the sheet shaped food product;
- using at least two distinct batter compositions, one of which is adapted to build stable, well defined continuous batter lines with a size of less than 15 mm upon being deposited on a heated surface (in particular a baking plate) at a temperature between 100° and 250° C ;
- building batter lines, which define an outer outline of the sheet shaped food product, on a heated surface at a temperature between 100° and 250° C;
- using a pouring head, a die, a toppling pouring cup or a spray head, in particular a shower type spray head, for pouring an amount of batter within a preformed batter outline;
- using a spray-robot to build a well defined batter outline and/or design lines on an intermittently or continuously moving heated surface at a temperature between 100° and 250° C.

The expression 'resist differently' in particular refers to the fact that one of the batter compositions may resist longer to the stated temperatures without 'burning' / 'charring', and or will keep / acquire a baked flexibility comparable to the baked flexibility of said other batter compositions having been submitted for a shorter time to said temperature between 100° and 250° C.

The expression 'which build bubbles to a different extent', as used in this context, has to be understood, more in particular, in the sense that one composition builds less bubbles than the other, or even substantially no bubbles, when treated at a temperature between 100° and 250° C.

According the invention, it is a preferred feature of the new process that said heated surface is an essentially flat surface (and which does not comprise "moulding areas" to define decorative patterns);
that said contour batter outline of the sheet shaped product forms a stable well defined continuous batter line;
that said at least one batter composition applied to build well defined batter lines forming said contour batter outline is also applied to build well defined batter lines forming design lines of the sheet shaped food product within said outer outline;
that batter lines forming designs and figures are provided before pouring said other batter composition forming the main surface of the sheet shaped food product;
that batter lines forming designs and figures of the sheet shaped food product are provided after pouring a separate batter mass forming the main surface of the sheet shaped food product;
that said at least one batter composition applied to build well defined batter lines is adapted to build stable, well defined batter lines with a size of less than 15 mm upon being deposited on a heated surface at a temperature between 100° and 250° C;
that said at least one batter composition applied to build well defined batter lines is adapted to resist longer to a temperature between 100° and 250° C without 'burning' / 'charring' as compared to said other batter composition, and/or acquires a baked flexibility comparable to the baked flexibility of said other batter compositions having been submitted for a shorter time to said temperature between 100° and 250° C;
more preferably that said at least one batter composition adapted to resist differently to a temperature between 100° and 250° C comprises a different fat ratio and/or a different liquid (in particular water) ratio;
that said other batter composition forming the main surface of the sheet shaped food product is more fluid / more liquid than the batter composition used for batter lines;
that at least one of the batter compositions comprises colouring substances and / or additives favouring the colouring / browning of baking products;
that said well defined batter lines building the outline of the sheet shaped food product, and/or building design lines of the sheet shaped food product are provided on the heated surface using at least one pouring head or die at a distance of less than 100 mm from the heated surface;
that a spray-robot is used to build said well defined contour batter outline and/or design lines on an intermittently or continuously moving heated surface at a temperature between 100° and 250° C; and/or that a pouring head or die, toppling pouring cup or spray head, in particular a shower type spray head is used for pouring an amount of said other batter mass within said preformed contour batter outline.

The distinct batter compositions of distinct colours referred to above may in particular involve the use of colouring substances (like cacao in particular or food grade colorants, food grade dyes, food grade inks, etc.) and / or additives favouring the colouring / browning of baking products (such as in particular reducing sugars) as well known in the art, etc.

The distinct batter compositions of distinct viscosity may in particular result from the use of batters with a different fat ratio and/or a different "humidity" ratio and, consequently, a different dry matter content (where "humidity" refers to conventional pastry liquids, in particular water and/or milk, etc., such as even beer).
The liquid ratio / liquid content / humidity ratio of the batter also influences its ability to resist the baking temperature (100° - 250° C) and the ability of the batter / dough to remain flexible and supple upon baking, and to 'resist differently' to a temperature between 100° and 250° C.

Very important, preferred, requirements for the batter composition which is applied to build the batter lines defining at least the outer outline of the sheet shaped food product, and optionally the batter lines forming design lines within said outer outline, relating to the temperature resistance and viscosity of said batter composition, are
- the amount of added liquid (in particular as water, milk and/or the like), which preferably is in the range of 25 % by weight to 60 % by weight of the total line batter composition, with an optimum between 40 and 45 % by weight. This requirement is thought to have a particular influence for the batter viscosity.
- the amount of added "fatty matter", which preferably is in the range of 7 % by weight to 20 % by weight of the total line batter composition, with an optimum around 14 % by weight. This requirement is thought to have a particular influence for the temperature resistance of the batter. the expression "fatty matter" refers to any fatty composition with a water content between 15 and 50 %, such as fat, shortenings, margarine, so called "cocoline" products, etc.
- the (substantial) absence of a leavening agent, yeast, baking powder, etc....). This apparently avoids bubble generation in the batter lines / strips / ribbons building the outline of the sheet shaped food product and its "design" lines, and appears to be favourable to the building of neat and strong moulding strips. This requirement is therefore thought to have a particular influence for the line stability of the batter lines.
- the dry matter content, which preferably is in the range of 25 % by weight to 40 % by weight of the total line batter composition, with an optimum around 34 % by weight. This requirement is thought to also have a particular influence for the line stability of the batter lines. The expression dry matter as used in this context refers to the whole of the essentially dry ingredients comprising more specifically the flour, sugar, salt and cacao powder (not taking into consideration, any "dry matter" that may be contained in a "not dry" ingredient such as fat, eggs, milk etc.). The flour may be any type of flour commonly used for pancakes, such as, preferably, wheat flour, but also buckwheat flour.
- the proportion of "binder" (i.e. the flour) in the dry matter ingredients, which should be considerably higher than usual for pancake batters; for the batter composition which is applied to build the batter lines defining at least the outer outline of the sheet shaped food product the proportion of binder is preferably above 60 %, more preferably above 65 % and most preferably in the order of 85 % of the dry matter ingredients, whereas in conventional pancake batters (in particular for Dutch type pancakes) the proportion of binder is in general in the order of 60 % of the dry matter ingredients. This requirement is thought to also have a particular influence for the line stability of the batter lines.

The expressions "added fatty matter" and "added liquid" as used in this context must be understood as the amount of fats and the amount of liquid added to the batter mass without taking into account any amounts of fat and/or liquid contained in other conventional ingredients of the batter composition, such as eggs, cacao mass, flour, sugar, salt, etc.

The process according to the invention is preferably carried out using an intermittently or continuously moving heated surface, such as, more particularly, an intermittently or continuously moving carrousel construction, an intermittently or continuously linear transfer construction, etc.

In accordance with a preferred feature of the invention well defined batter lines (strips, ribbons) building the outline of the sheet shaped food product, and the (optional) 'design' lines of the sheet shaped food product (which may build further contours inside an outer contour of the sheet shaped food product) are provided on the heated surface (in particular a flat baking plate) using at least one pouring head or die at a distance of less than 100 mm, preferably less than 50 mm and most preferably less than 10 mm from the heated surface.

The main surface of the sheet shaped food product is preferably formed by pouring a separate batter mass, manually or mechanically (by computer controlled means, such as spray robots), using at least one static or moving pouring head or die, toppling pouring cup or spray head, most preferably a shower type spray head.

According to one preferred embodiment of the invention a contour outline (and optional design contours within said outer contour) is first provided on the heated surface and subsequently filled up with the separate batter mass forming the main surface of the sheet shaped food product The 'filling up' batter mass can thereby be poured over optional design lines (and contour lines inside the outer contour) which may also have been provided before pouring the 'filling up' batter mass.

For this embodiment and for the preferred batter composition for building the batter lines as referred to more above, the preferred processing parameters are the following :
- temperature of the baking surface between 100 and 150 ° C
- batter lines, applied with a spraying robot having a die diameter of no more than 3 mm, most preferably between 0,61 and 0,84 mm
- a pouring speed ("writing speed" for the batter lines) of approximately 50 g per 3 seconds
- the successive portions of batter lines lie alone on the baking surface for 1 to 15 seconds, before pouring the batter mass forming the main surface of the sheet shaped product according to the invention
- the batter lines are subsequently baked further together with the batter mass forming the main surface for an additional 20 to 60 seconds

According to an alternative embodiment of the invention the batter lines (in particular the batter lines forming designs and figures, such as stripes, signs, letters, numbers, characters, etc.) within the outer contour of the sheet shaped food product according to the invention can also be provided after first pouring the filling up batter mass.

Pouring the amount of 'filling up' batter mass within said outer contour and over /around said inner contour outlines and/or 'design' lines, respectively, can thus be carried out using at least one pouring head or die, at least one toppling pouring cup or at least one shower type spray head, before or after pouring such batter outlines and/or 'design' lines.

The batter mass used for filling up the contour of the sheet shaped food product is preferably more fluid / more liquid than the batter composition used for the contour strips and/or design strips.
Suitable batter compositions there for are those commonly used in industrial pancake manufacture, with a added liquid content between 40 and 45 % by weight of the total filling up batter composition, an added fatty matter content in the order of 7 % by weight of the total filling up batter composition, a dry matter content between 25 and 40 % by weight (optimally around 34 % by weight) of the total filling up batter composition, with a proportion of binder (flour) in the dry matter ingredients in the order 60 %.

According to a further feature of the invention, a spray-robot can be used for providing the batter outlines and/or design lines on the heated surface and/or for providing the'filling up'batter mass.

A preferred apparatus for producing a sheet shaped food product according to the invention, comprising means for pouring a liquid batter on a heated surface and means for handling the obtained product, may more specifically comprises
- means for handling at least two distinct batter compositions
- robot means for building a well defined batter outline and/or design lines of a first batter composition on a heated surface at a temperature between 100° and 250° C
- means for pouring a second batter within a preformed batter outline.

The apparatus may more particularly involve :
- a flour silo
- a dough preparation unit
- a baking line comprising rotating or linearly moving baking tables, involving :
   - a robot for laying the contour strip and the face features on one ore more rows, for one or more pancakes simultaneously, using batter 1
   - one or more spray or pouring heads on one or more rows for filling up the contours with batter 2
   - a sprayer for spraying oil
   - transfer unit from the baking plate to the transport unit
- cooling tunnel for cooling the pancakes to minimum 0°C and / or
- freezing unit for deep freezing the pancakes to - 22 C
   (alternatively positioned after the packaging unit)
- piling unit for piling up the pancakes
- packaging unit

The invention also specifically relates to sheet shaped food products having a selected shape and/or incorporating selected decorative designs / images, obtainable by a process as disclosed here above, and more in particular such sheet shaped food product associated, as a combined party packaging unit, with atmosphere and/or user linked accessories for its use and/or consumption, designed, for instance, for a kids' party or the like.

Suitable accessories for such combined party packaging unit may for instance comprise appropriately decorated (such as with corresponding and/or associated 'characters') table sheets, napkins, plates, cutlery, cups or beakers, etc., as well as drinks, pancake spreads and toppings, etc., further candies and sweets, further party accessories like party decoration, streamers, ticker tapes, etc.

The invention is further illustrated by non limitative embodiments of the method and products claimed herein, shown in the attached drawings where.

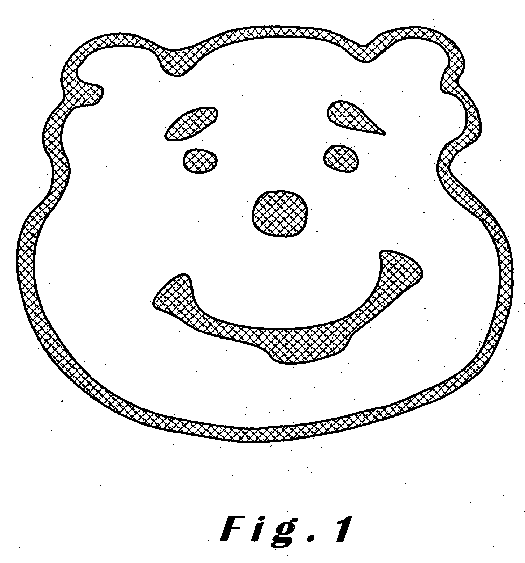

- Figure 1: provides one example of a pancake obtained with the process according to the invention (character design of "Winnie the Pooh")

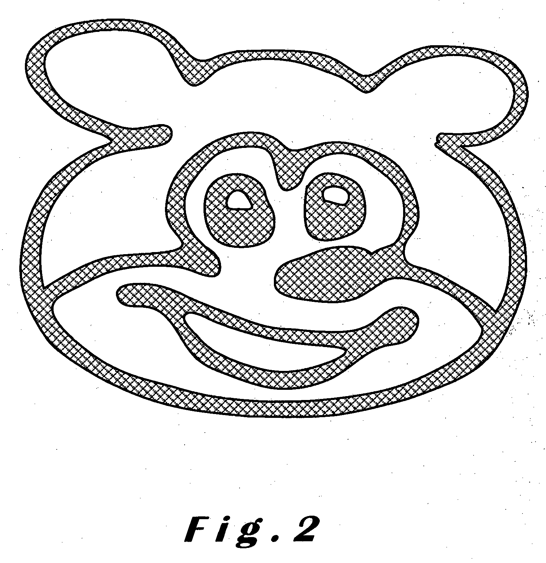

- Figure 2: provides another example of a pancake obtained with the process according to the invention (character design of "Mickey Mouse")

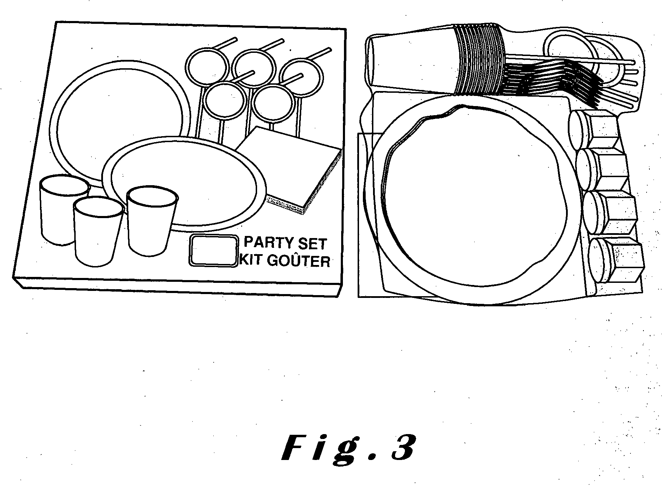

- Figure 3: provides an example of a party kit according to the invention (character designs of "Cars" on the pancakes not shown)

The invention is also illustrated, in a non limitative way, by the following "best mode" (at the time of filing this specification text) embodiments / examples for a batter mass composition for the batter lines in accordance with the invention, and for a batter mass composition for forming the main surface of the sheet shaped food product according to the invention
a typical **batter mass composition for the batter lines** in accordance with the invention is the following :

| | weight (gram) | weight % |
|---|---|---|
| pastry flour | 615 | 29,36 |
| fine sugar | 62 | 2,96 |
| whole egg | 225 | 10,74 |
| liquid | 850 | 40,57 |
| salt | 6 | 0,29 |
| fat | 300 | 14,32 |
| cacao mass | 37 | 1,77 |
| total | 2095 | 100,00 |

a typical **batter mass composition for forming the main surface** of the sheet shaped food product is the following :

| | weight % |
|---|---|
| pastry flour | 21,73 |
| fine sugar | 7,68 |
| whole egg | 14,19 |
| liquid | 43,06 |
| salt | 0,22 |
| fat | 7,15 |
| baking powder | 0,10 |
| milk powder | 5,87 |
| | |
| total | 100,00 |

which batter composition for forming the main surface of the sheet shaped food product according to the invention corresponds in essence to the batter masses normally used for Dutch type pancakes.

## Claims

1. Process for preparing a food product in the form of a sheet, having a selected shape and/or incorporating decorative designs I images, comprising pouring at least two distinct batter compositions on a heated surface, **characterised in that** it uses at least one batter composition which is applied to build well defined batter lines defining at least one outer outline of the sheet shaped food product, **in that** said contour batter outline is first provided on the heated surface, and **in that** the surface within said contour batter outline is subsequently filled up with another batter composition forming the main surface of the sheet shaped food product.

2. Process according to claim 1, **characterised in that** said heated surface is an essentially flat surface.

3. Process according to any one of claims 1 and 2, **characterised in that** said contour batter outline of the sheet shaped product forms a stable well defined continuous batter line.

4. Process according to any one of claims 1 to 3, **characterised in that** said at least one batter composition applied to build well defined batter lines forming said contour batter outline forms a batter line with a size of less than 15 mm upon being deposited on the heated surface at a temperature between 100° and 250° C.

5. Process according to any one of claims 1 to 4, **characterised in that** said at least one batter composition applied to build well defined batter lines forming said contour batter outline is also applied to build well defined batter lines forming design lines of the sheet shaped food product within said outer outline.

6. Process according to any one of the preceding claims, **characterised in that** batter lines forming designs and figures are provided before pouring said other batter composition forming the main surface of the sheet shaped food product.

7. Process according to any one of claims 1 - 5, **characterised in that** batter lines forming designs and figures of the sheet shaped food product are provided after pouring a separate batter mass forming the main surface of the sheet shaped food product.

8. Process according to any one of the preceding claims, **characterised in that** said at least one batter composition applied to build well defined batter lines is adapted to resist longer to a temperature between 100° and 250° C without 'burning' /'charring' as compared to said other batter composition, and/or acquires a baked flexibility comparable to the baked flexibility of said other batter compositions having been submitted for a shorter time to said temperature between 100° and 250° C.

9. Process according to claim 8, **characterised in that** said at least one batter composition adapted to resist differently to a temperature between 100° and 250° C comprises a different water ratio.

10. Process according to claim 9, **characterised in that** said at least one batter composition applied to build well defined batter lines has an amount of added liquid in the range of 25 % by weight to 60 % by weight of the total batter composition, an amount of added fatty matter in the range of 7 % by weight to 20 % by weight of the total batter composition, a substantial absence of a leavening agent, and a dry matter content in the range of 25 % by weight to 40 % by weight of the total batter composition.

11. Process according to any one of the preceding claims, **characterised in that** said other batter composition forming the main surface of the sheet shaped food product is more fluid I more liquid than the batter composition used for batter lines.

12. Process according to any one of the preceding claims, **characterised in that** at least one of the batter compositions comprises colouring substances and / or additives favouring the colouring / browning of baking products.

13. Process according to any one of the preceding claims, **characterised in that** a spray-robot is used to build said well defined contour batter outline and/or design lines on an intermittently or continuously moving heated surface at a temperature between 100° and 250° C.

14. Process according to any one of the preceding claims, **characterised in that** a pouring head, a die, a toppling pouring cup or a spray head, in particular a shower type spray head is used for pouring an amount of said other batter mass within said preformed contour batter outline.

15. Sheet shaped food product having a selected shape and/or incorporating selected decorative designs I images, obtainable by a process according to any one of claims 1 - 14, **characterised in that** it is associated, as a combined party packaging unit, with atmosphere and/or user linked accessories for its use and/or consumption.

## Patentansprüche

1. Verfahren zur Herstellung eines Lebensmittelprodukts in Form einer Platte mit einer ausgewählten Form und/oder mit dekorativen Ausgestaltungen/Bildern, umfassend das Gießen von mindestens zwei unterschiedlichen Rührteigzusammensetzungen auf eine erwärmte Oberfläche, **dadurch gekennzeichnet, dass** es mindestens eine Rührteigzusammensetzung verwendet, die zum Ausbilden von gut definierten Rührteiglinien aufgebracht wird, die mindestens einen Umriss des plattenförmigen Lebensmittelprodukts definieren, und dadurch, dass der Kontur-Rührteigumriss zuerst auf der erwärmten Oberfläche bereitgestellt wird und dass die Oberfläche innerhalb des Kontur-Rührteigumrisses danach mit einer anderen Rührteigzusammensetzung aufgefüllt wird, welche die Hauptoberfläche des plattenförmigen Lebensmittelprodukts bildet.

2. Verfahren nach Anspruch 1, **dadurch gekennzeichnet, dass** die erwärmte Oberfläche eine im Wesentlichen flache Oberfläche ist.

3. Verfahren nach einem der Ansprüche 1 und 2, **dadurch gekennzeichnet, dass** der Kontur-Rührteigumriss des plattenförmigen Produkts eine stabile, gut definierte, durchgehende Rührteiglinie definiert.

4. Verfahren nach einem der Ansprüche 1 bis 3, **dadurch gekennzeichnet, dass** mindestens eine Rührteigzusammensetzung, die zum Bilden von gut definierten Rührteiglinien aufgebracht wird, welche den Kontur-Rührteigumriss bilden, eine Rührteiglinie bildet, die eine Größe von weniger als 15 mm nach Abscheiden auf die erwärmte Oberfläche bei einer Temperatur zwischen 100 ºC und 250 ºC besitzt.

5. Verfahren nach einem der Ansprüche 1 bis 4, **dadurch gekennzeichnet, dass** mindestens eine Rührteigzusammensetzung, die zum Bilden von gut definierten Rührteiglinien aufgebracht wird, welche den Kontur-Rührteigumriss bilden, auch aufgebracht wird, um gut definierte Rührteiglinien zu bilden, die Ausgestaltungslinien des plattenförmigen Lebensmittelprodukts innerhalb des Außenumrisses bilden.

6. Verfahren nach einem der vorhergehenden Ansprüche, **dadurch gekennzeichnet, dass** die Rührteiglinien, die Ausgestaltungen und Figuren bilden, vor dem Gießen der anderen Rührteigzusammensetzung bereitgestellt werden, welche die Hauptoberfläche des plattenförmigen Lebensmittelprodukts bildet.

7. Verfahren nach einem der Ansprüche 1 bis 5, **dadurch gekennzeichnet, dass** die Rührteiglinien, die Ausgestaltungen und Figuren des plattenförmigen Lebensmittelprodukts bilden, nach dem Gießen einer separaten Rührteigmasse bereitgestellt werden, welche die Hauptoberfläche des plattenförmigen Lebensmittelprodukts bildet.

8. Verfahren nach einem der vorhergehenden Ansprüche, **dadurch gekennzeichnet, dass** mindestens eine Rührteigzusammensetzung, die aufgebracht wird, um gut definierte Rührteiglinien zu bilden, ausgelegt ist, einer Temperatur zwischen 100 ºC und 250 ºC länger zu widerstehen, ohne zu "verbrennen"/"verkohlen" als die andere Rührteigzusammensetzung, und/oder dadurch, dass sie eine gebackene Flexibilität erreicht, die mit der gebackenen Flexibilität der anderen Rührteigzusammensetzungen vergleichbar ist, die der Temperatur zwischen 100 ºC und 250 ºC während einer kürzeren Zeit ausgesetzt wurden.

9. Verfahren nach Anspruch 8, **dadurch gekennzeichnet, dass** mindestens eine Rührteigzusammensetzung ausgelegt ist, einer Temperatur zwischen 100 °C und 250 °C anders zu widerstehen, und ein anderes Wasserverhältnis umfasst.

10. Verfahren nach Anspruch 9, **dadurch gekennzeichnet, dass** mindestens eine Rührteigzusammensetzung, die zum Bilden von gut definierten Rührteiglinien aufgebracht wird, eine Menge von zugegebener Flüssigkeit in dem Bereich von 25 Gew.-% bis 60 Gew.% der Gesamt-Rührteigzusammensetzung, eine Menge von zusätzlicher Fettmasse in dem Bereich von 7 Gew.-% bis 20 Gew.-% der Gesamt-Rührteigzusammensetzung, im Wesentlichen kein Treibmittel und ein Trockenmassengehalt in dem Bereich von 25 Gew.-% bis 40 Gew.-% der Gesamt-Rührteigzusammensetzung aufweist.

11. Verfahren nach einem der vorhergehenden Ansprüche, **dadurch gekennzeichnet, dass** die andere Rührteigzusammensetzung, welche die Hauptoberfläche des plattenförmigen Lebensmittelprodukts bildet, fluidischer/flüssiger ist, als die Zusammensetzung, die für die Rührteiglinien verwendet wird.

12. Verfahren nach einem der vorhergehenden Ansprüche, **dadurch gekennzeichnet, dass** mindestens eine der Rührteigzusammensetzungen Färbesubstanzen und/oder Zusatzstoffe umfasst, welche die Färbung/Bräunung der Backprodukte begünstigen.

13. Verfahren nach einem der vorhergehenden Ansprüche, **dadurch gekennzeichnet, dass** ein Sprühroboter verwendet wird, um den gut definierten Kontur-Rührteigumriss und/oder die Ausgestaltungslinien auf einer sich zeitweise oder durchgehend bewegenden erwärmte Oberfläche bei einer Temperatur zwischen 100 ºC und 250 ºC zu bilden.

14. Verfahren nach einem der vorhergehenden Ansprüche, **dadurch gekennzeichnet, dass** ein Gießkopf, eine Düse, ein Kippgießrichter oder ein Sprühkopf, insbesondere ein duschartiger Sprühkopf, zum Gießen einer Menge der anderen Rührteigmasse innerhalb des vorgeformten Kontur-Rührteigumrisses verwendet werden.

15. Plattenförmiges Lebensmittelprodukt, das eine ausgewählte Form aufweist und/oder ausgewählte dekorative Ausgestaltungen/Bilder einschließt, die durch ein Verfahren nach einem der Ansprüche 1 bis 14 erhalten werden können, **dadurch gekennzeichnet, dass** es in einer kombinierten Party-Verpackungseinheit, mit Stimmungs- und/oder benutzerdefiniertem Zubehör zur Verwendung und/oder Verzehr assoziiert werden kann.

## Revendications

1. Procédé de préparation d'un produit alimentaire sous la forme d'une feuille, présentant une forme sélectionnée et/ou incorporant des motifs/images décoratifs, comprenant le fait de verser au moins deux compositions distinctes de pâte sur une surface chauffée, **caractérisé en ce qu'**il utilise au moins une composition de pâte qui est appliquée pour former des lignes bien définies de pâte définissant au moins un profil externe du produit alimentaire en forme de feuille, **en ce que** ledit profil de contour de pâte est d'abord disposé sur la surface chauffée, et **en ce que** la surface à l'intérieur dudit profil de contour de pâte est remplie ensuite d'une autre composition de pâte formant la surface principale du produit alimentaire en forme de feuille.

2. Procédé selon la revendication 1, **caractérisé en ce que** ladite surface chauffée est une surface essentiellement plane.

3. Procédé selon l'une quelconque des revendications 1 et 2, **caractérisé en ce que** ledit profil de contour de pâte du produit en forme de feuille forme une ligne de pâte continue, régulière et bien définie.

4. Procédé selon l'une quelconque des revendications 1 à 3, **caractérisé en ce que** ladite au moins une composition de pâte appliquée pour former des lignes de pâte bien définies formant ledit profil de contour de pâte forme une ligne de pâte avec une taille inférieure à 15 mm dès qu'elle est déposée sur la surface chauffée à une température allant de 100° à 250°C.

5. Procédé selon l'une quelconque des revendications 1 à 4, **caractérisé en ce que** ladite au moins une composition de pâte appliquée pour former des lignes de pâte bien définies formant ledit profil de contour de pâte est également appliquée pour former des lignes de pâte bien définies formant des lignes de motif du produit alimentaire en forme de feuille à l'intérieur dudit profil externe.

6. Procédé selon l'une quelconque des revendications précédentes, **caractérisé en ce que** des lignes de pâte formant des motifs et des figures sont fournies avant de verser ladite autre composition de pâte formant la surface principale du produit alimentaire en forme de feuille.

7. Procédé selon l'une quelconque des revendications 1 à 5, **caractérisé en ce que** des lignes de pâte formant des motifs et des figures du produit alimentaire en forme de feuille sont fournies après avoir versé une masse de pâte distincte formant la surface principale du produit alimentaire en forme de feuille.

8. Procédé selon l'une quelconque des revendications précédentes, **caractérisé en ce que** ladite au moins une composition de pâte appliquée pour former des lignes de pâte bien définies est adaptée pour résister plus longtemps à une température allant de 100° à 250°C sans brûler/se carboniser comparativement à ladite autre composition de pâte à frire, et/ou acquiert une souplesse à l'état cuit comparable à la souplesse à l'état cuit desdites autres compositions de pâte ayant été soumises pour une durée plus courte à ladite température allant de 100° à 250°C.

9. Procédé selon la revendication 8, **caractérisé en ce que** ladite au moins une composition de pâte adaptée pour résister différemment à une température allant de 100° à 250°C comprend une teneur en eau différente.

10. Procédé selon la revendication 9, **caractérisé en ce que** ladite au moins une composition de pâte appliquée pour former des lignes de pâte bien définies présente une quantité de liquide ajouté dans la plage de 25 % en poids à 60 % en poids de la composition totale de pâte à frire, une quantité de matières grasses ajoutées dans la plage de 7 % en poids à 20 % en poids de la composition totale de pâte à frire, une absence substantielle d'agent levant, et une teneur en matière sèche allant de 25 % en poids à 40 % en poids de la composition totale de pâte à frire.

11. Procédé selon l'une quelconque des revendications précédentes, **caractérisé en ce que** ladite composition de pâte formant la surface principale du produit alimentaire en forme de feuille est plus fluide/plus liquide que la composition de pâte utilisée pour des lignes de pâte à frire.

12. Procédé selon l'une quelconque des revendications précédentes, **caractérisé en ce qu'**au moins une des compositions de pâte comprend des substances colorantes et/ou des additifs favorisant la coloration/le brunissement de produits de boulangerie/pâtisserie.

13. Procédé selon l'une quelconque des revendications précédentes, **caractérisé en ce qu'**un robot pulvérisateur est utilisé pour former ledit profil bien défini de contour de pâte et/ou des lignes de motifs sur une surface chauffée se déplaçant de manière intermittente ou continue à une température allant de 100° à 250°C.

14. Procédé selon l'une quelconque des revendications précédentes, **caractérisé en ce qu'**une tête verseuse, un moule, un bac verseur basculant ou une tête de pulvérisation, en particulier une tête de pulvérisation de type pomme de douche est utilisé pour verser une quantité de ladite autre masse de pâte à l'intérieur dudit profil de contour de pâte préformé.

15. Produit alimentaire en forme de feuille présentant une forme sélectionnée et/ou incorporant des motifs/images décoratifs sélectionnés, pouvant être obtenu par un procédé selon l'une quelconque des revendications 1 à 14, **caractérisé en ce qu'**il est associé, en tant qu'unité d'emballage combinée pour fêtes, à des accessoires d'atmosphère et/ou liés à l'utilisateur pour son utilisation et/ou sa consommation.
